# EUROPEAN PATENT APPLICATION

(11) **EP 4 350 797 A1**
(43) Date of publication of application: **10.04.2024**
(21) Application number: 22815739.2
(22) Date of filing: 19.04.2022
(51) Int. Cl.: H01M 4/06, H01M 6/16, H01M 50/107, H01M 50/119, H01M 50/133, H01M 50/169, H01M 50/489

(54) **LITHIUM PRIMARY BATTERY**

(30) Priority: 31.05.2021 JP 2021091816
(71) Applicant: Panasonic Intellectual Property Management Co., Ltd., Kadoma-shi, Osaka 571-0057 (JP)
(72) Inventor: NISHIMURA, Naoaki, Kadoma-shi, Osaka 571-0057 (JP); TAKAHASHI, Tadayoshi, Kadoma-shi, Osaka 571-0057 (JP); OKAZAKI, Kyosuke, Kadoma-shi, Osaka 571-0057 (JP); TANIGAWA, Futoshi, Kadoma-shi, Osaka 571-0057 (JP)
(74) Representative: Novagraaf International SA
(86) International application number: PCT/JP2022/018114
(87) International publication number: WO 2022/254983

(57) **Abstract**

A lithium primary battery includes an outer can, a wound-electrode assembly, and a non-aqueous electrolyte. The wound-electrode assembly includes a positive electrode, a negative electrode, and a separator which are provided between the electrodes and are wound together. The positive electrode contains manganese dioxide. The negative electrode contains at least one substance selected from the group consisting of metallic lithium and metallic lithium containing a lithium alloy, and has a first main surface and a second main surface opposite to the first main surface. The first main surface and an entirety of the second main surface of the negative electrode face the positive electrode. The total area S of the first main surface and the second main surface of the negative electrode satisfies 250 cm² ≤ S ≤ 700 cm². The thickness Tp of the positive electrode satisfies 0.8 mm ≤ Tp ≤ 1.4 mm. The outer diameter D of the outer can satisfies 25 mm ≤ D ≤ 37 mm. The distance C between the outer can and the wound-electrode assembly satisfies 0.3 mm ≤ C ≤ 1.0 mm.

## Description

### TECHNICAL FIELD

The present disclosure relates to a lithium primary battery.

### BACKGROUND ART

ICT (Information and Communication Technology), including DX (digital transformation) has been accelerated. One of devices that are widely used precedingly in the ICT is, for example, a smart meter. Devices used for such applications may often employ primary batteries as an independent power supply when a power source is not available from electric wires. The primary batteries used for such applications require various performance characteristics such as long life, high capacity, and stable discharge at various currents, from a high pulsed discharge current for communications in ICT to a low current for normal operations. From the viewpoint of ensuring such performance, demand for primary batteries with large capacity increases.

PTL 1 proposes wound-electrode assembly for a cylindrical non-aqueous electrolyte battery. In wound-electrode assembly, positive and negative electrodes and separators are wound such that the number of windings which is defined by a winding-starting end and a winding-terminating end of a positive electrode including is greater than or equal to 1.0 and less than or equal to 4.0. The positive electrode sheet is obtained by a particular manufacturing method

PTL 2 proposes that, in a wound-electrode assembly of a cylindrical non-aqueous electrolyte primary battery, a positive electrode with a thickness of greater than or equal to 1.4 mm is used, and 2 sheets of resin microporous films with a thickness of 7 µm to 20 µm are disposed between a positive electrode active material layer and a negative electrode active material layer.

PTL 3 proposes the use of a wound-electrode assembly for a lithium primary battery. The wound-electrode assembly uses a positive electrode containing manganese dioxide and a negative electrode containing at least one substance selected from the group consisting of metallic lithium and lithium alloys and having a first main surface and a second main surface opposing the first main surface. The entireties of the first main surface and the second main surface faces the positive electrode. The total area of the first main surface and the second main surface is greater than or equal to 100 cm² and less than or equal to 180 cm².

### CITATION LIST

### Patent Literature

PTL 1: Japanese Patent Unexamined Publication No. 2005-032584
PTL 2: International Publication No. 2020/054662
PTL 3: International Publication No. 2020/095500

### SUMMARY

In order to ensure a high capacity in a lithium primary battery including a wound-electrode assembly, the size (for example, the diameter) of the battery is increased, or the thicknesses of the electrodes in the wound-electrode assembly is increased. However, the discharging of the lithium primary battery with the outer diameter being large and the thickness of the wound-electrode assembly being great may cause various problems in the portions that face each other. The problems include expansions of the thickness of the positive electrode, decreases in the thickness of the negative electrode, and changes in the thickness of the separators. Consequently, it is difficult to keep the balance of thickness at various parts of the wound-electrode assembly to be uniform. It is also difficult to keep the electrolyte retention amount of the positive electrode and the separator to be uniform. Consequently, it is more likely to cause unevenness in discharge reactions. In particular, the lithium primary battery with a large outer diameter may provide large unevenness in discharge reactions since the number of windings of the electrode assembly is greater and the electrode area is greater.

More specifically, during discharge, the positive electrode expands, increasing its thickness. On the other hand, the lithium in the negative electrode undergoes dissolution, reducing its thickness. Therefore, as the thickness of the electrodes is greater or the number of windings is greater, the amount of change in thickness during discharge becomes greater, hardly keeping the balance of thickness at the part where the positive electrode and the negative electrode face each other to be uniform to some degree. Consequently, the discharge reaction in the wound-electrode assembly does not undergo uniformly inside, causing differences from one part to another inside the electrode assembly. A separator is inserted between the positive electrode and the negative electrode to provide electrical insulation and retain the electrolyte. The separator has the function of alleviating the stress associated with changes in thickness of the electrodes to a slight degree. However, as the electrodes per se become thicker, the amount of changes in the thickness of the electrodes becomes accordingly greater, exceeding the limit that can be alleviated by the separator. Therefore, the separator is difficult to sufficiently alleviate the stress associated with changes in the thickness of the electrodes. Moreover, when the thickness of the separator changes, the amount of the electrolyte retained by the separators accordingly changes.

Adverse effects caused by changes in thickness of the electrodes and the separator in the electrode assembly are insignificant at the initial stage of discharge, but as the discharge progresses, adverse effects tend to be more significant. For example, when a high pulsed discharge current for ICT communication is passed at an intermediate level of depth of discharge of 40% to 60%, a large voltage drop may occur, making communication impossible. On the other hand, at a final stage of discharge at an even deeper depth of discharge of 80% to 90%, such a phenomenon may be observed that a voltage drop is small so communication is possible even when a high pulsed discharge current for ICT communication is passed. There is a need for a long life and high capacity lithium primary battery capable of performing stable discharge at various levels of current, from high pulsed discharge currents for ICT communication to low currents for normal operations, irrespective of depth of discharge of the battery.

A lithium primary battery according to an aspect of the present disclosure includes an outer can, and a wound-electrode assembly and a non-aqueous electrolyte that are accommodated in the outer can. The wound-electrode assembly includes: a positive electrode having a sheet shape; a negative electrode having a sheet shape having a first main surface and a second main surface opposed to each other; and a separator provided between the positive electrode and the negative electrode, the positive electrode, the negative electrode, and the separator being stacked and wound together. The positive electrode includes a positive electrode mixture containing manganese dioxide. The negative electrode includes at least one selected from the group consisting of metallic lithium and metallic lithium containing lithium alloy. The first main surface of the negative electrode and an entirety of the second main surface of the negative electrode face the positive electrode. A total area S of the first main surface and the second main surface of the negative electrode satisfies 250 cm² ≤ S ≤ 700 cm². A thickness Tp of the positive electrode satisfies 0.8 mm ≤ Tp ≤ 1.4 mm. An outer diameter D of the outer can satisfies 25 mm ≤ D ≤ 37 mm. A distance C between the outer can and the wound-electrode assembly satisfies 0.3 mm ≤ C ≤ 1.0 mm.

This lithium primary battery has a large capacity and is stably discharged even when discharge progresses.

### BRIEF DESCRIPTION OF THE DRAWINGS

FIG. 1 is a front view of a lithium primary battery according to an exemplary embodiment of the present disclosure for showing a schematic cross section of a part of the lithium primary battery in a vertical direction.
FIG. 2 shows evaluation results of lithium primary batteries according to the embodiment of the present disclosure.
FIG. 3 shows evaluation results of lithium primary batteries according to the embodiment of the present disclosure.
FIG. 4 shows evaluation results of lithium primary batteries according to the embodiment of the present disclosure.

### DESCRIPTION OF EMBODIMENT

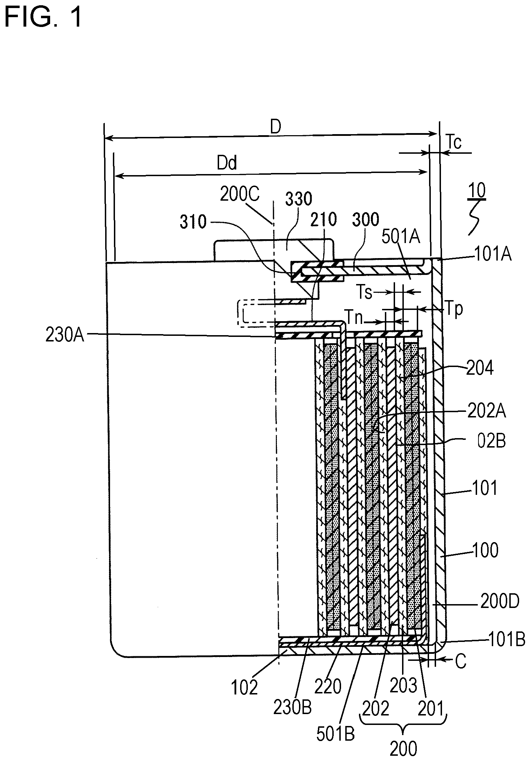

FIG. 1 is a front view of lithium primary battery 10 having a cylindrical shape according to an exemplary embodiment of the present disclosure for showing a schematic cross section of a part of cylindrical lithium primary battery 10 in a vertical direction. Lithium primary battery 10 is not limited to having a cylindrical shape, but may have a coin shape or a button shape which has a small height in the present invention.

Lithium primary battery 10 includes outer can 100 has a cylindrical shape with a bottom, wound-electrode assembly 200 accommodated in outer can 100, and sealing element 300 closing an opening of outer can 100. Outer can 100 includes side wall 101 having a tubular shape having open ends 101A and 101B opposite to each other, and bottom 102 that closes opening 501B at open end 101B of side wall 101. Sealing element 300 is fixed to open end 101A of outer can 100 by welding. Sealing element 300 closes opening 501A at open end 101A of side wall 101 of outer can 100. An opening is formed at the center of sealing element 300. External terminal 330 is disposed in the opening. Gasket 310 with an insulating property is disposed between external terminal 330 and sealing element 300.

Wound-electrode assembly 200 includes positive electrode 201 with a sheet shape, negative electrode 202 with a sheet shape, and separator 203 with a sheet shape provided between electrodes 201 and 202. Positive electrode 201, negative electrode 202, and separator 203 are wound spirally about center axis 200C. Internal lead wire 210 is connected to one of positive electrode 201 and negative electrode 202 (to negative electrode 202 in the example shown in the figure). Internal lead wire 210 is connected to external terminal 330 by, e.g., welding. Another internal lead wire 220 is connected to the other one of positive electrode 201 and negative electrode 202 (to positive electrode 201 in the example shown in the figure). Internal lead wire 220 is connected to an inner surface of outer can 100 by, e.g., welding.

Negative electrode 202 has first main surface 202A and second main surface 202B opposite to first main surface 202A. In wound-electrode assembly 200, first main surface 202A faces center axis 200C and second main surface 202B faces outward of wound-electrode assembly 200. The entirety of second main surface 202B of negative electrode 202 and first main surface 202A face positive electrode 201 across separator 203. Wound-electrode assembly 200 is accommodated in outer can 100 together with non-aqueous electrolyte 204. In order to prevent internal short-circuits, upper insulating plate 230A and lower insulating plate 230B are disposed at the top and bottom of electrode assembly 200, respectively. Electrode assembly 200 faces side wall 101 of outer can 100 across gap 200D with distance C.

Positive electrode 201 includes a positive electrode mixture containing manganese dioxide. Negative electrode 202 contains at least one substance selected from the group consisting of metallic lithium and metallic lithium containing lithium alloys, and has first main surface 202A and second main surface 202B opposite to first main surface 202A. First main surface 202A and the entirety of second main surface 202B face positive electrode 201. In this case, the outermost electrode of the electrode assembly 200 is positive electrode 201. For lithium primary battery 10, the following conditions (a)-(d) are listed. (a) Total area S of first main surface 202A and second main surface 202B of negative electrode 202 satisfies 250 cm² ≤ S ≤ 700 cm². (b) Thickness Tp of positive electrode 201 satisfies 0.8 mm ≤ Tp ≤ 1.4 mm. (c) Outer diameter D of outer can 100 satisfies 25 mm ≤ D ≤ 37 mm. (d) Distance C between outer can 100 and wound-electrode assembly 200 satisfies 0.3 mm ≤ C ≤ 1.0 mm.

PTLs 1-3 specifically describe A-size batteries slightly larger than AA-size, and has outer diameter D of outer can 100 of about 17 mm. On the other hand, the lithium primary battery of the present disclosure relates to C-size batteries and D-size batteries, and has outer diameter D of outer can 100 of 25 mm ≤ D ≤ 37 mm. The lithium primary battery of the present disclosure has a larger size than those of PTLs 1-3, about 1.5 times to about 2 times in outer diameter and about 2 times to 4 times in electrode areas. The present inventors discovered that problems that cannot be handled by the batteries with conventional configurations can be resolved by combining the above-mentioned four conditions (a)-(d) simultaneously.

The area of negative electrode 202 contributes to discharge characteristics of the battery more than the area of positive electrode 201. First, an effective range of the total area S of main surfaces 202A and 202B of negative electrode 202 is determined, and then, the range of thickness Tn of negative electrode 202 that yields the effect is determined based on the area of negative electrode 202 that is a half of the total area S of negative electrode 202 and the specific gravity of constituting components of negative electrode 202. Thickness Tp of positive electrode 201 satisfying 0.8 mm ≤ Tp ≤ 1.4 mm optimizes the configuration of wound-electrode assembly 200. Negative electrode 202 with total area S less than 250 cm² provides low discharge current for normal operations, but cannot provide high pulse discharge current for ICT communications. Negative electrode 202 with total area S greater than 700 cm² reduces the current collecting efficiently, hardly providing high current for ICT communications, and has large secondary materials, such as separator 203, accordingly reducing energy density. Positive electrode 201 with thickness Tp smaller than 0.8 mm hardly balances the compensation for the thickness decrease of negative electrode 202 during discharge by the expansion of positive electrode 201, hence tending to impair the stability of discharge at various depth of discharge. Positive electrode 201 with thickness Tp greater than 1.4 mm has an excessive large expansion, and may conversely accelerate reaction of negative electrode 202 during discharge, so it is unable to obtain a discharge capacity for a predetermined preparation amount. Moreover, the difference between the maximum outer diameter and the minimum outer diameter of electrode assembly 200 itself becomes even larger, which means that the cross section becomes farther different from a perfect circle, so that it may be impossible to achieve high density.

Distance C between wound-electrode assembly 200 and outer can 100 with outer diameter D of 25 mm ≤ D ≤ 37 mm satisfies 0.3 mm ≤ C ≤ 1.0 mm. In the initial discharge state, distance C between wound-electrode assembly 200 and outer can 100 is extremely important. Since wound-electrode assembly 200 does not have a perfect cylindrical shape, but has a maximum outer diameter and a minimum outer diameter, so that distance C may be within a range of 0.3 mm ≤ C ≤ 1.0 mm based on the maximum outer diameter. Distance C may preferably be within a range of 0.4 mm ≤ C ≤ 0.9 mm. If the battery has a portion with distance C less than 0.3 mm, portions of the battery with distance C of zero or wound-electrode assembly 200 presses and contact the inner surface of outer can 100 when discharge progresses to an intermediate level. As a consequence, the effect due to the pressure of outer can 100 on the condition of electrode assembly 200 during discharge becomes significant, and reaction unevenness is likely to occur. Distance C greater than 1.0 mm provides a gap between outer can 100 and the internal surface at a lot of portions of electrode assembly 200 until the final stage of discharge, and electrode assembly 200 is not affected by the pressure due to outer can 100 at all, so that discharge becomes unstable at the final stage of discharge.

In the configurations, lithium primary battery 10 according to the present disclosure provides the following advantageous effects. Since first main surface 202A and the entirety of second main surface 202B of negative electrode 202 face positive electrode 201, the outermost electrode out of the electrodes of wound-electrode assembly 200 (in other words, the outermost electrode) is positive electrode 201. As discharge proceeds, wound-electrode assembly 200 expands in radial directions, causing the inner surface of outer can 100 to contact the outer circumference of wound-electrode assembly 200. Since the outermost circumference of the electrodes of wound-electrode assembly 200 is positive electrode 201, positive electrode 201 and separator 203 cover lithium in negative electrode 202. Accordingly, when positive electrode 201 expands and electrode assembly 200 contacts the inner surface of outer can 100, the expansion of positive electrode 201 is directed inward rather than outward because of the reaction force of outer can 100. As a result, the thickness decrease due to discharge of negative electrode 202 is compensated and balanced, and reduces the stress due to the expansion of electrode assembly 200. Therefore, the battery has stable performance characteristics until the final stage of discharge irrespective of the depth of discharge. On the other hand, if the area of negative electrode 202 is large and the outermost circumference of the electrodes of wound-electrode assembly 200 is negative electrode 202, the pressure due to the expansion of positive electrode 201 associated with the progress of discharge is directed outward, so that negative electrode 202 may be easily cut off around the outermost end which is a terminated end of windings of positive electrode 201. Consequently, a predetermined estimated amount of discharge capacity is not obtained, thus hardly solving the problems.

Thickness Tp of positive electrode 201, distance C, and total area S of negative electrode 202 are values at the initial stage of discharge of lithium primary battery 10. In the present description, lithium primary battery 10 at the initial stage of discharge means lithium primary battery 10 having a depth of discharge (hereinafter referred to as "DOD") less than or equal to 10%. For stabilizing characteristics, lithium primary battery 10 is slightly discharged after fabrication of battery 10 to reduce the battery voltage from about 3.6 V to about 3.2 V. The slight discharge is referred to as a predischarge. The unused products (at the time of shipment) of lithium primary battery 10 that have undergone predischarge are in a state of DOD of 0%. As long as lithium primary battery 10 has the DOD less than or equal to 10%, not just in the unused state, it may be considered that the values defined for lithium primary battery 10 at the initial stage of discharge in the present description are not affected. The DOD of 100% means the discharge capacity (i.e., rated discharge capacity, design capacity) when battery 10 is discharged at a rated discharge current (for example, at a current greater than or equal to 1 mA and less than or equal to 5 mA) and the voltage of battery 10 reaches 2 V. Although the rated current depends on the size or capacity of battery 10, a rated current less than or equal to a certain value results in no difference in the resulting discharge capacity. The discharge capacity at DOD of 100% based on the rated current used as reference, to calculate the discharge capacity at each DOD.

Negative electrode 202 has a sheet shape having two main surfaces occupies most of the surfaces of negative electrode 202. One of the main surfaces is first main surface 202A, and the main surface opposite to first main surface 202A (in other words, the other main surface) is second main surface 202B. Negative electrode 202 having the sheet shape has end surface 202C connected to first main surface 202A and second main surface 202B other than first main surface 202A and second main surface 202B. The area of each main surface means the projected area of each main surface in a sheet thickness direction when the sheet is laid in a flat state. In the case that the electrode has a part of each main surface containing neither metallic lithium nor metallic lithium containing a lithium alloy, the area of the part is excluded in calculating the area of each main surface. Total area S of first main surface 202A and second main surface 202B does not include the area of end surface 202C. Total area S of main surfaces 202A and 202B is substantially the area of the portions of the surfaces of negative electrode 202 that face positive electrode 201.

Distance C is the difference between the maximum diameter of wound-electrode assembly 200 and inner diameter Dd of side wall 101 at a portion of outer can 100 accommodating wound-electrode assembly 200 therein. Inner diameter Dd of outer can 100 is the average of inner diameters Dd measured at plural positions (for example, three positions at angular positions of every 60°) along the inner circumferential surface of side wall 101 of outer can 100 at the midpoint in a height direction along center axis 200C of electrode assembly 200 in lithium primary battery 10. The maximum diameter of electrode assembly 200 is the maximum diameter of electrode assembly 200 at the midpoint of electrode assembly 200 in the height direction. The maximum diameter of electrode assembly 200 is measured on the outermost circumferential surface of electrode assembly 200. In the case that the outermost circumference of electrode assembly 200 is separator 203, the maximum diameter of electrode assembly 200 is determined including separator 203 at the outermost circumference.

Outer diameter D of side wall 101 of outer can 100 is the average of the outer diameters measured at plural positions (for example, three positions at angular positions of every 60°) along the outer circumferential surface of side wall 101 of outer can 100 at the midpoint of outer can 100 in the height direction in lithium primary battery 10.

A configuration of cylindrical lithium primary battery 10 according to the foregoing aspect will be detail below.

### Wound-Electrode Assembly

### Positive Electrode

The positive electrode active material may be made of manganese dioxide alone or may be made of mixture of manganese dioxide with, e.g., manganese oxide or graphite fluoride. The manganese dioxide is preferably electrolytic manganese dioxide neutralized with, e.g., ammonia, sodium, or lithium. The manganese dioxide is preferably made of sintered electrolytic manganese dioxide. Specifically, the electrolytic manganese dioxide may be preferably sintered in air or in oxygen at a temperature ranging from 300°C to 450°C for about 6-12 hours. The oxidation number of manganese contained in the manganese dioxide is typically 4; but the oxidation number is not limited to 4, and may be a smaller number. Examples of usable manganese dioxides include MnO, Mn₃O₄, Mn₂O₃, and MnO₂, and generally, manganese dioxide is used as a main component. Manganese dioxide may be in a mixed crystal state, in which plural types of crystals are contained. In the case that non-sintered electrolytic manganese dioxide is used, it is preferable to use a manganese dioxide in which the degree of crystallinity is increased by conditions in electrolytic synthesis to reduce the specific surface area. In addition, it is possible to add chemical manganese dioxide or the like, if the amount is small.

Positive electrode 201 further includes a positive electrode current collector in addition to the positive electrode mixture. Positive electrode 201 may include a positive electrode mixture layer.

Thickness Tp of positive electrode 201 satisfies 0.8 mm ≤ Tp ≤ 1.4 mm. Thickness Tp may satisfy 1.0 mm ≤ Tp ≤ 1.3 mm, or 1.1 mm ≤ Tp ≤ 1.3 mm from the viewpoint that it is easier to provide a higher capacity and a higher discharge voltage even when discharge progresses.

Thickness Tp of positive electrode 201 is the average of the thicknesses measured at plural positions (for example, ten positions) on positive electrode 201 included in electrode assembly 200 in lithium primary battery 10 at an initial stage of discharge. Thickness Tp of positive electrode 201 is measured on a cross-sectional image perpendicular to the axial direction of electrode assembly 200 of lithium primary battery 10. The cross-sectional image may be obtained by, for example, X-ray radiography or X-ray computed tomography (CT).

In addition to the positive electrode active material, the positive electrode mixture contains, for example, binder agent and conductive agent as optional components.

Examples of the binder agent include fluoropolymers, polyacrylonitriles, polyimide resins, acrylic resins, polyolefins, and rubbery polymers. The positive electrode mixture may contain one type of binder agent or two or more types of binder agents.

A preferable example the conductive agent is a carbon material. Examples of the carbon material include carbon black, carbon nanotube, and graphite. The positive electrode mixture may contain one type of conductive agent or two or more types of conductive agents. The conductive agent may be allowed to be present between a positive electrode current collector and a positive electrode mixture layer.

Density dₚ of the positive electrode mixture satisfies, for example, 2.5 g/cm³ ≤ dₚ ≤ 3.5 g/cm³. Density dₚ may preferably satisfy 2.6 g/cm³ ≤ dₚ ≤ 3.3 g/cm³ from the viewpoint that it is even easier to stabilize the discharge voltage against the expansion of positive electrode 201 when absorbing the electrolyte or during discharge and against the thinning of negative electrode 202 due to dissolution.

Density dₚ of the positive electrode mixture may be obtained based on thickness Tp of positive electrode 201 and the mass and volume of the positive electrode mixture excluding the current collector after positive electrode 201 is removed from lithium primary battery 10 at the initial stage of discharge, washed with a solvent, and dried.

Examples of the material for the positive electrode current collector include metallic materials, such as stainless steel, Al, and Ti. The metallic materials may be either a metal alone or alloys. Examples of the positive electrode current collector include sheets and porous materials. The positive electrode current collector may be a metal foil. The positive electrode current collector may be, e.g., a porous positive electrode current collector, a metallic mesh, an expanded metal, or a punched metal.

A method of manufacturing positive electrode 201 is not particularly limited. To fabricate positive electrode 201, a positive electrode mixture may be applied onto a positive electrode current collector, or a positive electrode mixture may fill a porous positive electrode current collector. Alternatively, a positive electrode mixture may have a sheet shape and stacked on the positive electrode current collector so as to physically contact the positive electrode current collector. In fabricating positive electrode 201, the positive electrode mixture may be used in a paste form or in a clay form, as needed, using a liquid medium in addition to the constituting components of the positive electrode mixture. Examples of the liquid medium include water and organic liquid media. The liquid medium may be in a liquid state at, e.g., room temperature (20-35°C). At an appropriate stage of manufacture, positive electrode 201 may be dried as needed, or positive electrode 201 may also be compressed in a thickness direction of positive electrode 201.

### Negative Electrode

Negative electrode 202 contains at least one metallic material selected from the group consisting of metallic lithium and metallic lithium containing lithium alloys. Examples of the lithium alloys include Li-Al, Li-Sn, Li-Ni-Si, and Li-Pb. The content of the metallic elements other than lithium that are contained in the lithium alloy is, for example, greater than or equal to 0.05 mass% and less than or equal to 1.0 mass% with respect to the lithium alloy.

Negative electrode 202 with the sheet shape may be made of, e.g., a metal foil. Negative electrode 202 with the sheet shape may be formed by extrusion molding the metallic materials described above.

A tape or the like may be affixed to a part of negative electrode 202 with the sheet shape so as to prevent negative electrode 202 from being consumed and isolated accordingly during discharge. The width of the tape is preferably greater than or equal to 0.5 mm to less than or equal to 3 mm so as not to suppressing battery reaction. The tape may be affixed to either one or both of first main surface 202A and second main surface 202B of negative electrode 202 with the sheet shape.

In the present disclosure, first main surface 202A and the entirety of second main surface 202B of negative electrode 202 face positive electrode 201. This configuration allows positive electrode 201 to be an electrode that is located at the outermost circumference of wound-electrode assembly 200.

Capacity Cn of negative electrode 202 and capacity Cp of positive electrode 201 preferably satisfy Cp ≤ Cn. Since unreacted lithium remains even at the final stage of discharge and maintains the thickness of negative electrode 202 to some degree, reaction unevenness is reduced as an advantageous effect on negative electrode 202 side. The ratio Cn/Cp of capacity Cn of negative electrode 202 to capacity Cp of positive electrode 201 may be preferably greater than 1, and may be, for example, greater than or equal to 1.05, or greater than or equal to 1.10. the ratio Cn/Cp is preferably less than or equal to 1.2 so as to provide a sufficiently high energy density.

Capacity Cn and capacity Cp may be obtained by the following procedure. Positive electrode 201 is removed from lithium primary battery 10 at the initial stage of discharge, and the mass of manganese dioxide contained in positive electrode 201 is obtained. Negative electrode 202 is removed from lithium primary battery 10 at the initial stage of discharge, and the mass of metallic lithium contained in negative electrode 202 is obtained. Based on the mass of manganese dioxide and the theoretical capacity of manganese dioxide (308 mAh/g), capacity Cp is obtained. Based on the mass of metallic lithium contained in negative electrode 202 and the theoretical capacity of lithium (3860 mAh/g), capacity Cn is obtained.

Total area S of first main surface 202A and second main surface 202B of negative electrode 202 satisfies 250 cm² ≤ S ≤ 700 cm². Total area S preferably is within the range of 265 cm² ≤ S ≤ 680 cm², more preferably 300 cm² ≤ S ≤ 500 cm². So as to obtain a high discharge voltage and a high capacity

### Separator

Separator 203 is made of a porous sheet having ion-permeability and insulative property. Examples of the porous sheet include microporous films, woven fabrics, and nonwoven fabrics. Separator 203 may be either a single-layer structure or a multi-layer structure. An example of separator 203 having a multi-layer structure is separator 203 including plural layers that are different in at least one of material or structure. In separator 203 having a multi-layer structure with three or more layers, some of the layers (for example, two layers) may be the same in material and structure, or all the layers may be different in at least one of material or structure.

Examples of the material for separator 203 include polymer materials. Examples of the polymer materials include olefin resins, polyamide resins, polyimide resins (such as polyimides and polyamide imides), celluloses, polyphenylene sulfides, and polytetrafluoroethylenes. Separator 203 may further contain an additive as needed. Examples of the additive include inorganic fillers and the like.

Thickness Ts of separator 203 may be selected from the range greater than or equal to 10 µm to less than or equal to 200 µm. When separator 203 is made of a microporous film, thickness Ts of separator 203 may be, for example, greater than or equal to 10 µm to less than or equal to 80 µm. Thickness Ts of separator 203 made of a microporous film is preferably greater than or equal to 30 µm and less than or equal to 50 µm so as to reduce the internal resistance and obtain a higher discharge voltage easily even when discharge progresses. In the case thar separator 203 contains nonwoven fabric, thickness Ts of separator 203 may be selected from the range greater than or equal to 100 µm to less than or equal to 200 µm. A microporous film and a nonwoven fabric may be combined together to provide the separator.

### Others

Wound-electrode assembly 200 is formed by spirally winding negative electrode 202, positive electrode 201, and separator 203 interposed between the electrodes. Negative electrode 202 and positive electrode 201 are disposed with separator 203 interposed between the electrodes such that the entirety of second main surface 202B and first main surface 202A of the negative electrode 202 face positive electrode 201.

The maximum diameter of wound-electrode assembly 200 is obtained for electrode assembly 200 removed from lithium primary battery 10 at the initial stage of discharge. More specifically, diameters are measured along the outermost circumferential surface at plural positions (for example, six positions) in directions perpendicular to the winding axis, and the maximum value among the measured diameters is regarded as the maximum diameter of electrode assembly 200. The diameter of electrode assembly 200 is measured with, e.g., a vernier caliper.

### Non-Aqueous Electrolyte

Non-aqueous electrolyte 204 in lithium primary battery 10 has lithium ion conductivity. Such non-aqueous electrolyte 204 contains a non-aqueous solvent and a lithium salt dissolved in the non-aqueous solvent.

Examples of the lithium salt include lithium fluoroborate, lithium hexafluorophosphate, lithium trifluoromethanesulfonate, lithium bis(fluorosulfonyl)imide, lithium bis(trifluoromethylsulfonyl)imide, and lithium perchlorate. Non-aqueous electrolyte 204 may contain one type of lithium salt, or two or more types of lithium salts in combination.

Examples of the non-aqueous solvent include, but are not limited to, esters (for example, carbonic esters, carboxylic esters such as γ-butyrolactone) and ethers (such as 1,2-dimethoxyethane). Examples of the carbonic esters include cyclic carbonates (such as propylene carbonate and ethylene carbonate) and chain carbonates (such as dimethyl carbonate and methyl ethyl carbonate). Non-aqueous electrolyte 204 may contain one type of non-aqueous solvent, or two or more types of non-aqueous solvents in combination.

The concentration of lithium salt in non-aqueous electrolyte 204 is, for example, greater than or equal to 0.1 mol/L and less than or equal to 3.5 mol/L.

Non-aqueous electrolyte 204 may further contain additive as needed. Examples of the additive include vinylene carbonate, fluoroethylene carbonate, and vinylethyl carbonate. Non-aqueous electrolyte 204 may contain one type of additive, or two or more types of additives in combination.

### Outer Can

Outer can 100 is made of stainless steel, iron, aluminum, or an aluminum alloy. Each of the materials satisfies the strength to prevent deformation of outer can 100 even when positive electrode 201 expands, to reduce variations in discharge reactions, and to stabilize the discharge voltage even when discharge progresses. Outer can 100 may be processed with annealing or plating, as needed. In addition, outer can 100 made of stainless steel has high durability that withstands a long-term use.

Thickness Tc of outer can 100 is preferably greater than or equal to 0.25 mm. Thickness Tc is preferably 0.3 mm ≤ Tc ≤ 0.45 mm for discharge stability and energy density

Thickness Tc of outer can 100 is the average of the thicknesses measured at plural positions (for example, six positions at every 60°) along the inner circumferential surface of outer can 100 at the midpoint in a height direction of electrode assembly 200 of lithium primary battery 10. Thickness Tc of outer can 100 is measured on a cross-sectional image perpendicular to a direction along center axis 200C of electrode assembly 200 of lithium primary battery 10.

Inner diameter Dd of side wall 101 of outer can 100 may be measured on a cross-sectional image perpendicular to the direction of center axis 200C of electrode assembly 200 of lithium primary battery 10. Distance C is obtained from inner diameter Dd (average value) of outer can 100 and the maximum diameter of electrode assembly 200 that are determined as described above.

According to the above-described aspect of the present disclosure, the polarity of outer can 100 may be either positive electrode 201 or negative electrode 202. In the present disclosure, basically, two types of configurations are possible for the outermost circumference of wound-electrode assembly 200. The first one is a configuration in which separator 203 completely covers the outermost electrode, positive electrode 201, and in addition, a tape is affixed to a portion of the outermost circumference on separator 203 so that the winding state can be maintained. The second one is a configuration in which the outermost electrode, positive electrode 201, is not completely covered with separator 203 so that separator 203 does not exist partially or not at all on the outermost electrode, and a tape is affixed to a portion of the outermost electrode to maintain the winding state. Regardless of the polarities outer can 100, the combination of a tape and separator 203 that completely covers the outermost electrode, positive electrode 201 is preferable from the viewpoint of reducing the risk of internal short circuits resulting from excessive physical vibrations or dropping, separation of the electrode mixture from the electrodes, electrode deformations, or the like. Since separator 203 or the tape may have failures due to external impacts or the like, the polarity may preferably be matched between outer can 100 and the outermost electrode by making outer can 100 to be positive electrode 201 and the outermost electrode to be positive electrode 201 so as to reduce the risk of internal short circuits. Outer can 100 and the electrode having the same polarity may contact each other with pressure. However, an insulative coating may preferably be provided on the inner surface of outer can 100 so as to reduce the risk of internal short circuits.

### Sealing Element

Lithium primary battery 10 may include sealing element 300 that seals opening 501A of outer can 100. Sealing element 300 is made of stainless steel, iron, aluminum, or aluminum alloy. Sealing element 300 may be preferably made of stainless steel so as to easily provide sufficient durability and strength. Sealing element 300 may be processed with annealing or plating, as needed.

Each of outer can 100 and sealing element 300 may be electrically connected to either one of positive electrode 201 and negative electrode 202 of electrode assembly 200. Opening 501A of outer can 100 may be sealed by press-fitting open end 101A of outer can 100 to the circumferential edge of sealing element 300, or by laser welding sealing element 300 to the circumferential edge of opening 501A of outer can 100. In the case that the sealing is performed by the former way, insulative gasket 310 is disposed between open end 101A of outer can 100 and the circumferential edge of sealing element 300. In the case that the sealing is performed by the latter way, sealing element 300 and external terminal 330 are prepared as separate members and insulative gasket 310 is disposed between external terminal 330 and sealing element 300. For applications that require a long expected life, sealing element 300 is welded to open end 101A of outer can 100 with laser. This is advantageous for ensuring a longer life since the adverse effects resulting from the entry of the air into battery 10 or the volatilization of non-aqueous electrolyte 204 can be reduced. The adverse effects resulting from the entry of the air or the volatilization of non-aqueous electrolyte 204 result in a multiplier of the number of years of use, so that the adverse effects are believed to be greater as the number of years of use becomes longer.

### Others

Lithium primary battery 10 according to the above-described aspect of the present disclosure has a high capacity and is capable of stable discharge even when discharge progresses. In addition, the battery delivers a high output power and provides a relatively high discharge voltage even when discharge progresses. Therefore, the battery has a long life and also has discharge performance of high current, such as pulsed current, over a long term. For these reasons, lithium primary battery 10 is suitable for being incorporated in devices that are controlled to discharge pulsed current over a long term. Examples of such devices include, but are not limited to, utility meters for ICT equipped with communication functions (for example, utility meters equipped with communication functions). Examples of the utility meters include various utility meters, such as electricity meters, gas meters, and water meters.

### Examples

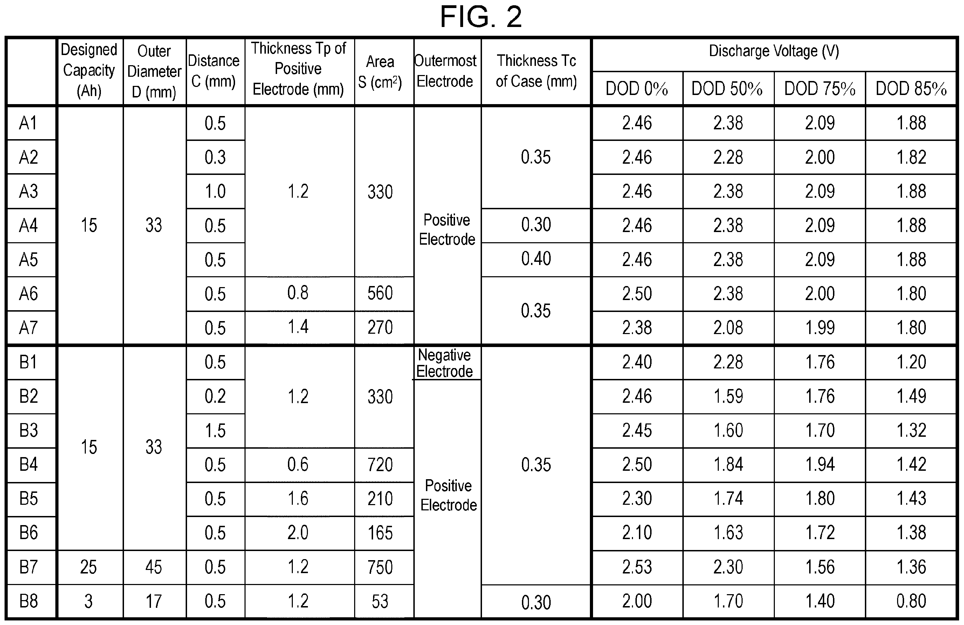

The present disclosure will be detailed below with reference to the following examples and comparative examples. However, the present invention is not limited to the following examples. FIGS. 2-4 are tables showing specifications of examples and comparative examples of lithium primary battery 10.

### Examples 1-16 and Comparative Examples 1-8

### (1) Preparation of Positive Electrode

To prepare positive electrode 201, 92 parts by mass of electrolytic manganese dioxide sintered at 400°C for 7 hours was mixed with 3 parts by mass Ketjen Black as a conductive agent, 5 parts by mass of polytetrafluoroethylene as a binder agent, and an appropriate amount of pure water, and the resultant material was kneaded, to prepare a wet positive electrode mixture.

Next, the et positive electrode mixture fills a positive electrode current collector made of an expanded metal made of stainless steel (SUS 316) to prepare a positive electrode precursor. After that, the positive electrode precursor was dried, pressure-rolled with a roll presser, and cut into predetermined dimensions, thereby providing positive electrode 201 having thickness Tp as shown in the tables. The filling amount of the positive electrode mixture was adjusted to obtain the designed capacities as shown in the tables. The dimensions of positive electrode 201 were adjusted such that the outermost electrode of electrode assembly 200 was positive electrode 201 with negative electrode 202 while total area S of first main surface 202A and second main surface 202B has the values indicated in the tables. However, for Comparative Example 1, the dimensions of positive electrode 201 were adjusted so that the outermost electrode was negative electrode 202.

### (2) Preparation of Negative Electrode

Sheet-shaped Li and Li-Al alloy (the Al content with respect to the lithium contained in negative electrode 202: 0.3 mass %) were cut into predetermined dimensions so that total area S of first main surface 202A and second main surface 202B of negative electrode 202 was the value indicated in the tables, to obtain sheet-shaped negative electrode 202. The dimensions (width, height, and/or thickness) of the sheet were adjusted such that the amount of Li contained in negative electrode 202 was the same in Examples and Comparative Examples.

The ratio Cn/Cp of capacity Cn of negative electrode 202 to capacity Cp of positive electrode 201 was about 1.1.

### (3) Preparation of Wound Assembly

The positive electrode mixture was peeled off from a part of positive electrode 201 to expose the positive electrode current collector, and a positive electrode tab lead made of stainless steel was resistance welded to the exposed part. A negative electrode tab lead made of nickel was connected to a predetermined position on negative electrode 202 by pressure welding. Separator 203 was interposed between positive electrode 201 and negative electrode 202. Then, Separator 203, positive electrode 201, and negative electrode 202 were wound in a spiral shape about center axis 200C to prepare a wound body. They were secured with an insulative tape to maintain the wound body, thereby providing wound-electrode assembly 200 having a cylindrical shape. At this moment, positive electrode 201 and negative electrode 202 were stacked such that that total area S of first main surface 202A and second main surface 202B of negative electrode 202 was the values indicated in the tables, and also, separator 203 was disposed such that the outermost electrode was completely covered. The outermost electrode of electrode assembly 200 was positive electrode 201 in the examples other than Comparative Example 1. The outermost electrode was negative electrode 202 in Comparative Example 1.

For separator 203, a microporous layer (thickness 40 µm) having a three-layer structure including a polyethylene microporous layer (intermediate layer: thickness 20 µm) and two layers of polypropylene microporous layer (outer layer: thickness 10 µm) that sandwich the intermediate layer.

### (4) Preparation of Non-Aqueous Electrolyte

Lithium trifluoromethanesulfonate as lithium salt was dissolved into non-aqueous solvent in which propylene carbonate (PC), ethylene carbonate (EC), and 1,2-dimethoxyethane (DME) was mixed in a volume ratio of 1:1:2, at a concentration of 0.5 mol/L to prepare a non-aqueous electrolyte.

### (5) Assembling of Lithium Primary Battery

Electrode assembly 200 was inserted into outer can 100 made of stainless steel (SUS 316) having a closed-end cylindrical shape having outer diameter D and thickness Tc shown in the tables, with a ring-shaped lower insulating plate disposed at the bottom part. The positive electrode tab lead was resistance welded to the inner bottom surface of outer can 100, and the upper insulating plate was disposed on the upper part of electrode assembly 200. After that, the negative electrode tab lead was resistance welded to external terminal 330 fixed to sealing element 300. Next, the non-aqueous electrolyte was put into outer can 100 and electrode assembly 200 is impregnated with the electrolyte. After that, sealing element 300 was inserted at opening 501A of outer can 100, and is welded to fitting portions of opening 501A of outer can 100 with laser. Thus, five samples of hermetically sealed-type cylindrical lithium primary battery 10 that has a structure shown in FIG. 1 were prepared for each of Examples. Distance C between outer can 100 and wound-electrode assembly 200 of assembled batteries 10 is shown in the tables. Distance C was adjusted by adjusting the thickness and length of each of the electrodes. After that, batteries 10 was subjected to predischarge such that the voltage of each battery 10 became 3.2 V.

### (6) Evaluation

The prepared samples of lithium primary battery 10 were evaluated in discharge voltages at different depths of discharge (DOD) according to the following procedure.

The samples of lithium primary battery 10 which were preliminary discharged were set to DOD of 0%, and the minimum voltages were measured when they were discharged at -40°C and at 500 mA for 5 seconds. The average of the minimum voltages of 5 samples of lithium primary battery 10 were measured. This average value was used as the discharge voltage at DOD of 0%.

The samples of lithium primary battery 10 for which the discharge voltage at DOD 0% was obtained were discharged to DOD of 50%, DOD of 75%, and DOD of 85% DOD at 23°C and at 30 mA. The minimum voltages of the samples were measured while discharged at -40°C and at 500 mA for 5 seconds in the respective conditions, and the average value was obtained.

The evaluation results for Examples and Comparative Examples are shown in FIGS. 2 to 4. Examples 1 to 16 are samples A1 to A16, and Comparative Examples 1 to 8 are samples B1 to B8, respectively.

As shown in FIG. 2, a drop of discharge voltage is observed at DOD of 50% in the cases where distance C is less than 0.3 mm or exceeds 1.0 mm (sample B2 and sample B3). Samples B2 and B3 show slightly higher discharge voltages at DOD of 75% than at DOD of 50%, but they show even lower discharge voltages at DOD of 85%. Similar tendencies are observed also in the cases where thickness Tp of positive electrode 201 is less than 0.8 or greater than 1.4 mm (samples B4 to B6). In other words, in these examples, the discharge voltage is unstable, and as the discharge progresses, the discharge voltage decreases significantly. It is believed that such results were observed since unevenness in discharge reactions occurred in samples B2, B3, B5, and B6 because of large variations in the distribution of electrolyte 204. In addition, it is believed that in these Comparative Examples, the discharge voltage dropped at 50% DOD because it is difficult to keep a balance between the expansion of positive electrode 201 and the contraction of negative electrode 202. Sample B6 is an example in which total area S of first main surface 202A and second main surface 202B is small, but it is believed that the discharge voltage was relatively low from the initial stage because its reaction aera is small.

In contrast to the above results of Comparative Examples, in the cases where distance C satisfies 0.3 mm ≤ C ≤ 1.0 mm and thickness Tp of positive electrode 201 satisfies 0.8 mm ≤ Tp ≤ 1.4 mm, no drop of the discharge voltage at DOD of 50% was observed, and relatively high discharge voltage was maintained even at DOD of 85% (samples A1-A7).

In the case where the first main surface 202A and the entirety of the second main surface 202B do not face positive electrode 201 (i.e., the outermost electrode of electrode assembly 200 is negative electrode 202), the discharge voltage dropped significantly as the discharge progressed (sample B 1). This is believed for the following reason. Since positive electrode 201 was not present at the outermost circumference, its alleviating function could not be obtained during discharge. Consequently, reaction unevenness occurred, and the metallic lithium of negative electrode 202 partially broke, increasing the resistance of battery 10. In the case where outer diameter D of outer can 100 exceeds 37 mm or total area S exceeds 700 cm² as well, the discharge voltage significantly dropped as the discharge progressed (B7). This is believed to be that, because the length of the electrodes was excessively great, broken locations in negative electrode 202 increased as the discharge progressed. In the case where outer diameter D of outer can 100 is less than 25 mm or total area S is less than 250 cm², the discharge voltage significantly dropped as the discharge progressed (sample B8). This is believed to be because it was difficult to provide an electrode area sufficient for performing discharge reactions.

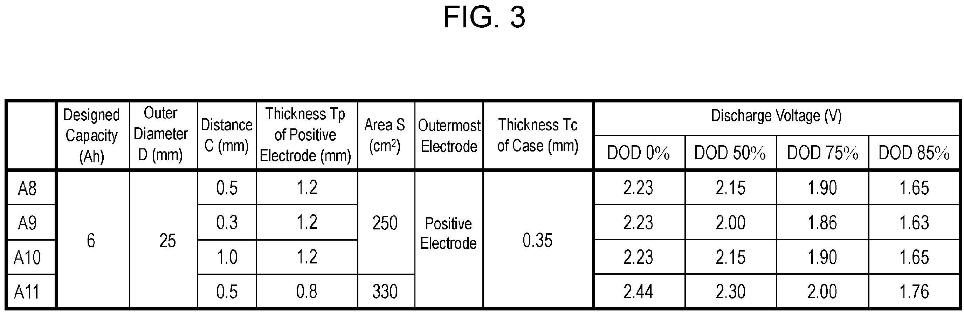

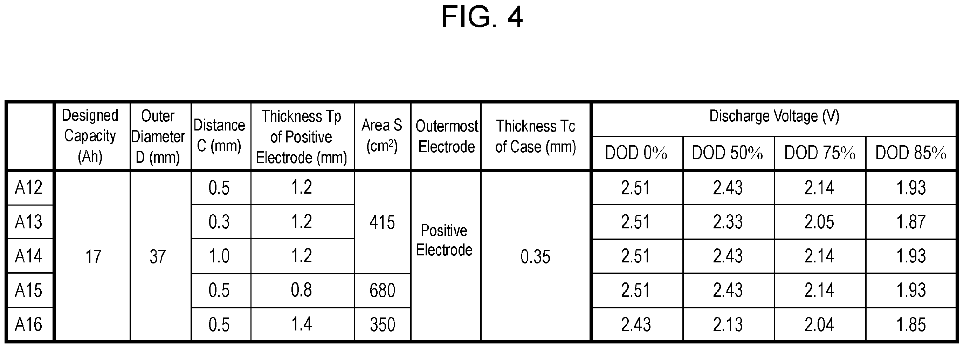

As shown in FIGS. 3 and 4, in the cases where outer diameter D of outer can 100 is 25 mm or 37 mm, no drop of discharge voltage at 50% DOD was observed, and a relatively high discharge voltage was obtained even when the discharge progresses, as in the cases of samples A1 to A7.

### INDUSTRIAL APPLICABILITY

Lithium primary batteries according to the above-described aspects of the present disclosure are capable of exhibiting a high capacity and performing stable discharge, and are suitable for being incorporated in ICT devices that are controlled to discharge pulsed current. Examples of such devices include various devices (such as electronic devices and electric devices) that are equipped with communication functions, such as utility meters equipped with communication functions (such as smart meters). It should be noted, however, that the applications of the lithium primary batteries are not limited to these devices.

### REFERENCE MARKS IN THE DRAWINGS

- 10: lithium primary battery
- 100: outer can
- 200: wound-electrode assembly
- 201: positive electrode
- 202: negative electrode
- 203: separator
- 204: non-aqueous electrolyte
- 210: internal lead wire
- 230A: upper insulating plate
- 230B: lower insulating plate
- 300: sealing element
- 310: gasket
- 330: external terminal

## Claims

1. A lithium primary battery comprising:
an outer can;
a wound-electrode assembly accommodated in the outer can; and
a non-aqueous electrolyte accommodated in the outer can, wherein
the wound-electrode assembly includes:
a positive electrode having a sheet shape;
a negative electrode having a sheet shape having a first main surface and a second main surface opposed to each other; and
a separator provided between the positive electrode and the negative electrode, the positive electrode, the negative electrode, and the separator being stacked and wound together,
the positive electrode includes a positive electrode mixture containing manganese dioxide,
the negative electrode includes at least one selected from the group consisting of metallic lithium and metallic lithium containing lithium alloy,
the first main surface of the negative electrode and an entirety of the second main surface of the negative electrode face the positive electrode,
a total area S of the first main surface and the second main surface of the negative electrode satisfies 250 cm² ≤ S ≤ 700 cm²,
a thickness Tp of the positive electrode satisfies 0.8 mm ≤ Tp ≤ 1.4 mm,
an outer diameter D of the outer can satisfies 25 mm ≤ D ≤ 37 mm, and
a distance C between the outer can and the wound-electrode assembly satisfies 0.3 mm ≤ C ≤ 1.0 mm.

2. The lithium primary battery according to claim 1, wherein a thickness Tc of the outer can satisfies 0.3 mm ≤ Tc ≤ 0.45 mm.

3. The lithium primary battery according to claim 1 or 2, wherein a capacity Cp of the positive electrode and a capacity Cn of the negative electrode satisfy Cp ≤ Cn.

4. The lithium primary battery according to any one of claims 1 to 3, wherein a density dₚ of the positive electrode mixture satisfies 2.6 g/cm³ ≤ dₚ ≤ 3.3 g/cm³.

5. The lithium primary battery according to any one of claims 1 to 4, wherein the separator is made of a microporous film having a thickness greater than or equal to 30 µm to less than or equal to 50 µm.

6. The lithium primary battery according to any one of claims 1 to 5, further comprising
a sealing element sealing an opening of the outer can,
wherein the sealing element is laser-welded to the outer can.

7. The lithium primary battery according to any one of claims 1 to 6, wherein the outer can is made of stainless steel.
